# FASCICULE DE BREVET EUROPEEN

(11) **EP 1 711 091 B1**
(45) Date de publication et mention de la délivrance du brevet: **20.06.2007**
(21) Numéro de dépôt: 04816483.4
(22) Date de dépôt: 23.12.2004
(51) Int. Cl.: A47J 43/06

(54) **APPAREIL ELECTROMENAGER DE PREPARATION CULINAIRE AVEC ACCESSOIRE AMOVIBLE COMPORTANT UN DISPOSITIF DE COMMANDE**
ELEKTRISCHES HAUSHALTSGERÄT ZUR NAHRUNGSMITTELZUBEREITUNG MIT EINEM ENTFERNBAREN ZUBEHÖRTEIL MIT EINER STEUERVORRICHTUNG
HOUSEHOLD ELECTRIC FOOD PREPARATION APPLIANCE PROVIDED WITH A REMOVABLE ACCESSORY COMPRISING A CONTROL DEVICE

(30) Priorité: 03.02.2004 FR 0400998
(43) Date de publication de la demande: 18.10.2006
(73) Titulaire: SEB S.A., 69132 Ecully Cedex (FR)
(72) Inventeur: BASORA, Antonio, E-08028 Barcelone (ES); ARNEDO, Julian, E-08031 Barcelone (ES)
(74) Mandataire: Kiehl, Hubert
(86) Numéro de dépôt international: PCT/FR2004/003369
(87) Numéro de publication internationale: WO 2005/084504

(56) Documents cités:
- FR-A- 2 442 034
- FR-A- 2 730 398
- FR-A- 2 798 575

## Description

La présente invention concerne le domaine technique des appareils électroménagers de préparation culinaire comportant un boîtier moteur sur lequel peut être monté au moins un accessoire de travail amovible.

Il est connu du document FR 2 442 034 un appareil du type précité comportant un accessoire de travail amovible associé à un boîtier moteur. L'accessoire de travail amovible comprend une embase montée sur le boîtier moteur, un récipient de travail monté sur l'embase, et un couvercle coiffant le récipient de travail. Un outil rotatif de type couteau est monté dans le récipient de travail. Selon une forme de réalisation, l'embase comporte un élément de commande susceptible d'actionner un bouton de commande agencé sur le boîtier moteur. Une telle construction permet de commander le moteur de l'appareil à partir de l'accessoire de travail. Toutefois la commande ainsi obtenue nécessite une action continue de l'utilisateur sur l'élément de commande. Une telle construction est donc plutôt adaptée aux accessoires de travail fonctionnant par impulsion, par exemple les accessoires de travail pour hacher de l'ail ou des fines herbes. De plus aucune sécurité de présence du couvercle n'est prévue. Selon une autre forme de réalisation, le couvercle peut actionner le bouton de commande du boîtier. Une telle construction est également adaptée aux accessoires de travail fonctionnant par impulsion.

Un but de la présente invention est de proposer un appareil électroménager de préparation culinaire comprenant un boîtier moteur susceptible de recevoir un accessoire de travail prévu pour un fonctionnement continu sans intervention de l'utilisateur après la mise en marche de l'appareil.

Un autre but de la présente invention est de proposer un appareil électroménager de préparation culinaire du type précité, dans lequel la sécurité est améliorée.

Un autre but de la présente invention est de proposer un appareil électroménager de préparation culinaire du type précité, dont l'utilisation soit particulièrement simple.

Ces buts sont atteints avec un appareil électroménager de préparation culinaire comprenant un boîtier dans lequel est disposé un moteur, et un accessoire de travail amovible susceptible d'être monté sur le boîtier, l'accessoire de travail comportant un corps et un élément de commande solidaire du corps, l'élément de commande comportant un organe de manoeuvre susceptible d'être actionné par l'utilisateur, l'élément de commande étant monté mobile par rapport au corps et étant susceptible d'actionner une pièce de commande du moteur montée dans le boîtier, du fait que l'élément de commande comporte un organe de verrouillage prévu pour coopérer avec une conformation de retenue du boîtier lorsque l'élément de commande actionne la pièce de commande. Ainsi l'organe de manoeuvre peut être déplacé entre une première position, dans laquelle l'accessoire de travail peut être mis en place sur le boîtier ou être retiré du boîtier, et une deuxième position, dans laquelle l'accessoire de travail est verrouillé sur le boîtier et l'outil de travail rotatif est entraîné par le moteur. Grâce à l'élément de commande appartenant à l'accessoire de travail, l'utilisateur doit seulement manoeuvrer l'organe de manoeuvre pour faire fonctionner l'appareil ou pour permettre le retrait de l'accessoire de travail du boîtier.

Selon une forme de réalisation avantageuse, l'élément de commande forme un anneau. L'élément de commande peut ainsi être agencé dans la base du corps de l'accessoire de travail, sans nécessiter un volume spécifique.

Selon une forme de réalisation avantageuse, l'élément de commande comporte une pièce extérieure assemblée avec une pièce intérieure. Cette disposition permet de faciliter le montage de l'élément de commande et de simplifier la construction de l'accessoire de travail. La pièce extérieure peut être montée au moins partiellement à l'extérieur du corps. La pièce intérieure peut être montée à l'intérieur du corps. La pièce intérieure et/ou la pièce extérieure peuvent être en forme d'anneau.

Avantageusement alors, l'organe de manoeuvre est issu de la pièce extérieure. En alternative, l'organe de manoeuvre peut notamment être rapporté.

Selon une forme de réalisation avantageuse l'élément de commande présente une surface de came susceptible de coopérer avec la pièce de commande. L'élément de commande peut être entraîné en rotation au moyen de l'organe de manoeuvre. L'élément de commande actionne alors la pièce de commande au moyen de la surface de came lors de la rotation. En alternative l'élément de commande peut notamment comporter une butée susceptible de coopérer avec la pièce de commande.

Avantageusement alors la surface de came est issue de la pièce extérieure. Cette disposition permet de prévoir une course importante pour l'organe de manoeuvre.

Selon une forme de réalisation avantageuse l'organe de verrouillage est issu de la pièce intérieure. Cette disposition permet de protéger l'organe de verrouillage à l'intérieur du corps de l'accessoire.

Selon une forme de réalisation avantageuse, l'accessoire de travail comporte un couvercle. Le couvercle permet de fermer le corps de l'accessoire de travail. L'accessoire de travail peut notamment être un bol blender, une centrifugeuse ou un coupe-légumes.

Alors, selon une forme de réalisation avantageuse, un élément de transmission agencé dans le corps présente un organe de retenue susceptible d'entraver le déplacement du couvercle par rapport au corps, l'élément de commande comportant un organe de commande susceptible de déplacer l'élément de transmission entre une position dans laquelle le couvercle peut être mis en place ou retiré du corps et une autre position dans laquelle le couvercle est verrouillé sur le corps. Cette disposition permet de commander le verrouillage du couvercle sur le corps lors de l'actionnement de l'organe de manoeuvre.

Avantageusement alors l'organe de commande est issu de la pièce intérieure. Cette disposition facilite la commande de l'élément de transmission.

Avantageusement alors l'élément de transmission présente une rampe de pré-actionnement susceptible de coopérer avec le couvercle, une butée et un organe d'actionnement, l'organe de commande présentant une zone d'appui susceptible de coopérer avec la butée lorsque le couvercle est écarté de la rampe de pré-actionnement, l'organe de commande présentant une rampe d'actionnement prévue pour coopérer avec l'organe d'actionnement lorsque le couvercle est en prise avec la rampe de pré-actionnement. Ainsi l'élément de commande est bloqué tant que le couvercle n'est pas en place sur le corps, et le couvercle ne peut être retiré lorsque le corps est verrouillé sur le boîtier. L'appareil est particulièrement sûr tout en étant très simple d'utilisation.

Selon une forme de réalisation avantageuse l'élément de transmission comporte une tige montée contre un ressort de rappel. La tige peut notamment être montée coulissante dans le corps, par exemple dans une poignée du corps. En alternative, l'élément de transmission peut comporter une pièce montée pivotante.

Selon une forme de réalisation avantageuse, un ressort de rappel est monté entre le corps et l'élément de commande, et l'élément de commande présente un moyen de retenue apte à coopérer avec un élément de retenue du boîtier pour retenir le ressort de rappel hors de sa position de repos lorsque l'accessoire de travail est en place sur le boîtier. Ainsi l'élément de commande peut occuper deux positions stables, une position dans laquelle l'accessoire de travail peut être mis en place et retiré du boîtier, et une position dans laquelle l'accessoire de travail est verrouillé sur le boîtier et le moteur peut entraîner l'outil de travail de l'accessoire de travail. De préférence, la position de repos du ressort de rappel correspond à la position de l'élément de commande dans laquelle l'accessoire de travail peut être mis en place et retiré du boîtier. Toutefois la position de repos du ressort de rappel peut aussi correspondre à l'autre position de l'élément de commande.

Selon une forme de réalisation avantageuse, un outil de travail rotatif susceptible d'être entraîné par le moteur est agencé dans le corps.

L'invention sera mieux comprise à l'étude d'un exemple de réalisation et d'une variante, pris à titre nullement limitatif, illustrés dans les figures annexées, dans lesquelles :
- la figure 1 est une vue en coupe verticale d'une première configuration d'un appareil électroménager de préparation culinaire, comportant un boîtier moteur surmonté d'un premier accessoire de travail,
- la figure 2 est une vue verticale schématique de l'appareil montré à la figure 1, tourné de 90°, montrant le dispositif de mise en marche de l'appareil,
- la figure 3 est une vue en coupe verticale d'une deuxième configuration d'un appareil électroménager de préparation culinaire, dans lequel le boîtier moteur illustré à la figure 1 est surmonté d'un deuxième accessoire de travail, l'élément de commande étant représenté de manière schématique,
- la figure 4 est une vue de dessous en perspective de l'accessoire de travail illustré à la figure 3,
- la figure 5 est une vue de dessus en perspective de l'élément de commande de l'accessoire de travail illustré à la figure 4,
- la figure 6 est une vue partielle en coupe verticale de l'accessoire de travail illustré aux figures 3 et 4,
- la figure 7 est une vue de dessus en perspective du boîtier moteur illustré aux figures 1, 2 et 3,
- les figures 8, 9 et 10 illustrent schématiquement trois états de l'accessoire de travail illustré aux figures 3 et 4, l'élément de commande étant représenté de manière schématique,
- la figure 11 est une vue en perspective d'une variante de l'élément de commande, représenté monté dans une pièce de la partie inférieure de l'accessoire de travail, ladite pièce étant sectionnée pour une meilleure compréhension,
- les figures 12, 13 et 14 illustrent schématiquement trois états de l'accessoire de travail comportant l'élément de commande de la figure 11, l'élément de commande étant représenté de manière schématique.

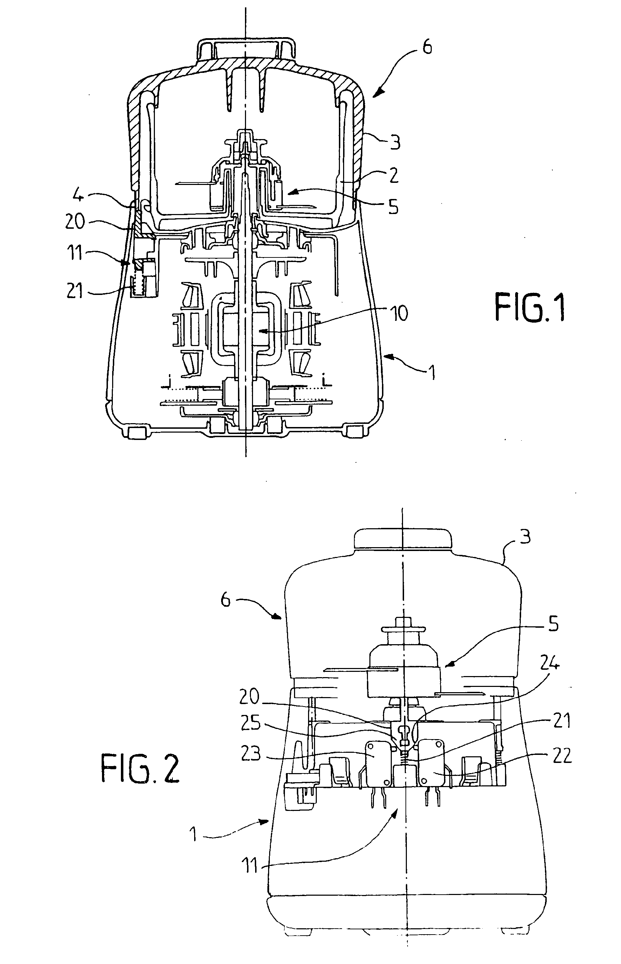

La figure 1 montre un appareil électroménager de préparation culinaire comportant un boîtier 1 sur lequel est disposé un récipient de travail 2. Un couvercle 3 coiffe le récipient de travail 2. Un outil de travail rotatif 5 est agencé dans le récipient de travail 2. Le récipient de travail 2, l'outil de travail rotatif 5 et le couvercle 3 forment un accessoire de travail 6 amovible susceptible d'être monté sur le boîtier 1.

Le boîtier 1 comporte un moteur 10 associé à un dispositif de commande 11, mieux visible à la figure 2.

Le dispositif de commande 11 comporte une pièce de commande 20 montée mobile dans le boîtier 1 contre un ressort de rappel 21. La pièce de commande 20 est susceptible d'actionner un interrupteur 22 et un deuxième interrupteur 23. A cet effet, la pièce de commande 20 comporte une surface de came 24 prévue pour coopérer avec l'interrupteur 22, et une autre surface de came 25 prévue pour coopérer avec le deuxième interrupteur 23.

Tel que bien visible à la figure 1, le couvercle 3 comporte un bord inférieur 4 coopérant avec la pièce de commande 20.

Le moteur 10 disposé dans le boîtier 1 permet d'entraîner en rotation l'outil de travail 5 agencé dans le récipient de travail 2.

L'interrupteur 22 permet de commander l'alimentation du moteur 10. Le deuxième interrupteur 23 permet de sélectionner le sens d'alimentation du bobinage du moteur 10. La figure 2 illustre la position de repos de la pièce de commande 20.

L'accessoire de travail 6 illustré aux figures 1 et 2 est généralement utilisé en fonctionnement par impulsions.

Lorsque l'utilisateur appuie sur le couvercle 3, le bord inférieur 4 du couvercle 3 appuie sur la pièce de commande 20 qui est déplacée contre le ressort de rappel 21. La pièce de commande 20 actionne l'interrupteur 22 puis le deuxième interrupteur 23. Lorsque l'utilisateur relâche le couvercle 3, le ressort de rappel 21 repousse la pièce de commande 20. Le deuxième interrupteur 23 retrouve alors sa position initiale, inversant le sens de rotation du moteur 10, puis l'interrupteur 22 retrouve également sa position initiale et provoque l'arrêt du moteur 10. Cette disposition connue de l'art antérieur permet de freiner plus rapidement l'outil de travail rotatif 5 lors de l'arrêt de l'appareil.

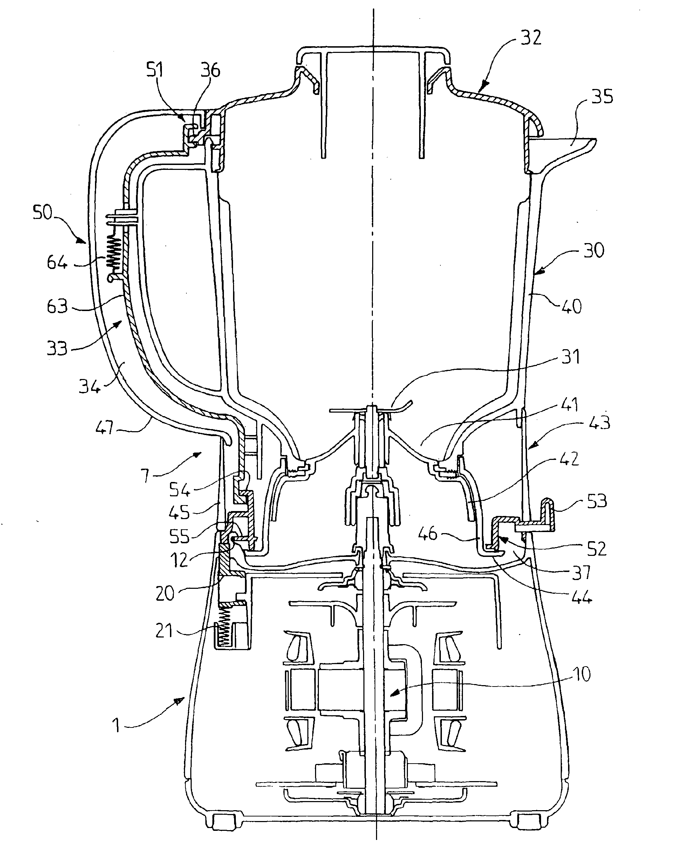

Tel qu'illustré à la figure 3, le boîtier 1 de l'appareil électroménager de préparation culinaire selon l'invention peut être utilisé avec un accessoire de travail 7, différent de l'accessoire de travail 6. L'accessoire de travail 7 comprend un corps 30, un outil de travail rotatif 31, agencé dans le corps 30 et susceptible d'être entraîné par le moteur 10, ainsi qu'un couvercle 32.

Le corps 30 forme un réceptacle dans lequel est disposé l'outil de travail rotatif 31. Le corps 30 comporte un dispositif de sécurité 33 susceptible de coopérer avec le couvercle 32 et avec le boîtier 1. Le corps 30 présente une poignée 34 et un bec verseur 35.

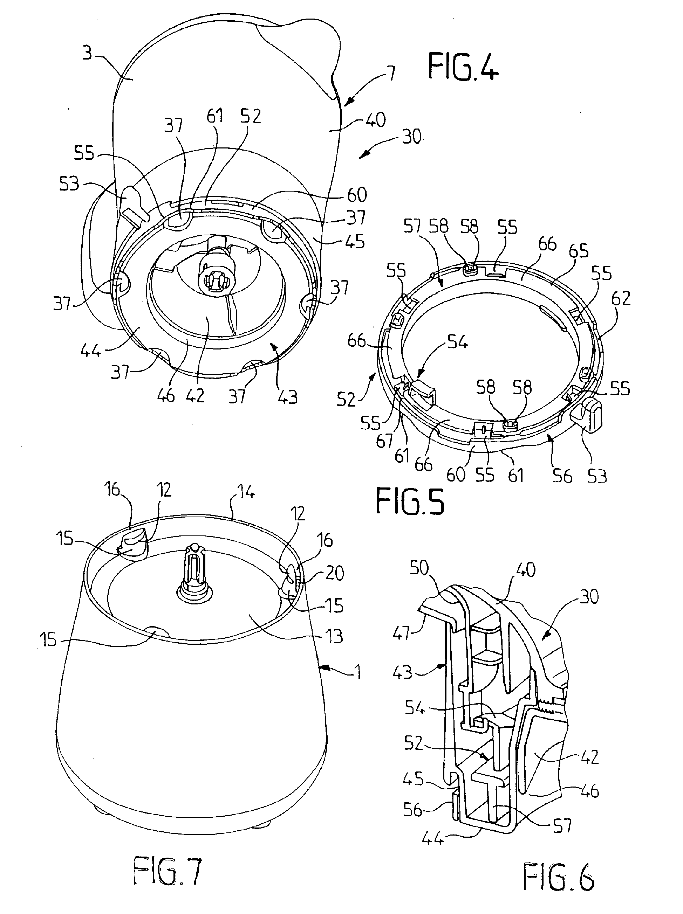

Plus particulièrement, le corps 30 comporte un récipient 40 présentant une ouverture inférieure 41 dans laquelle est monté un support 42 pour l'outil de travail rotatif 31. Le corps 30 comprend également une base 43 montée sous le récipient 40. La base 43 présente un fond 44 annulaire, une paroi annulaire extérieure 45 et une paroi annulaire intérieure 46, mieux visibles sur la figure 6. La base 43 comporte des découpes 37 ménagées dans le fond 44 et dans la paroi annulaire extérieure 45. Un enjoliveur 47 forme avec le récipient 40 la poignée 34. Le couvercle 32 est apte à fermer le récipient 40.

Le dispositif de sécurité 33 comporte un élément de transmission 50 agencé dans le corps 30. Plus particulièrement l'élément de transmission 50 comporte une tige 63 montée mobile contre un ressort de rappel 64. La tige 63 est au moins partiellement agencée dans la poignée 34.

L'élément de transmission 50 présente un organe de retenue 51 susceptible d'entraver le déplacement du couvercle 32 par rapport au corps 30.

L'élément de transmission 50 coopère d'une part avec le couvercle 32 et d'autre part avec un élément de commande 52, représenté schématiquement sur la figure 3. L'élément de commande 52 est solidaire du corps 30 et est monté mobile par rapport au corps 30. Plus particulièrement, l'élément de commande 52 est monté dans la base 43.

L'élément de commande 52 est susceptible d'actionner la pièce de commande 20 montée dans le boîtier 1. L'élément de commande 52 comporte un organe de manoeuvre 53, susceptible d'être actionné par l'utilisateur, un organe de commande 54, prévu pour coopérer avec l'élément de transmission 50, au moins un organe de verrouillage 55, prévu pour coopérer avec une conformation de retenue 12 du boîtier 1, et au moins une surface de came 61 susceptible de coopérer avec la pièce de commande 20.

De préférence, l'élément de commande 52 comporte au moins trois organes de verrouillage 55 espacés de 120°, le boîtier 1 comportant alors trois conformations de retenue 12 agencées en correspondance. Avantageusement, l'élément de commande 52 peut comporter six éléments de verrouillage 55 espacés de 60°.

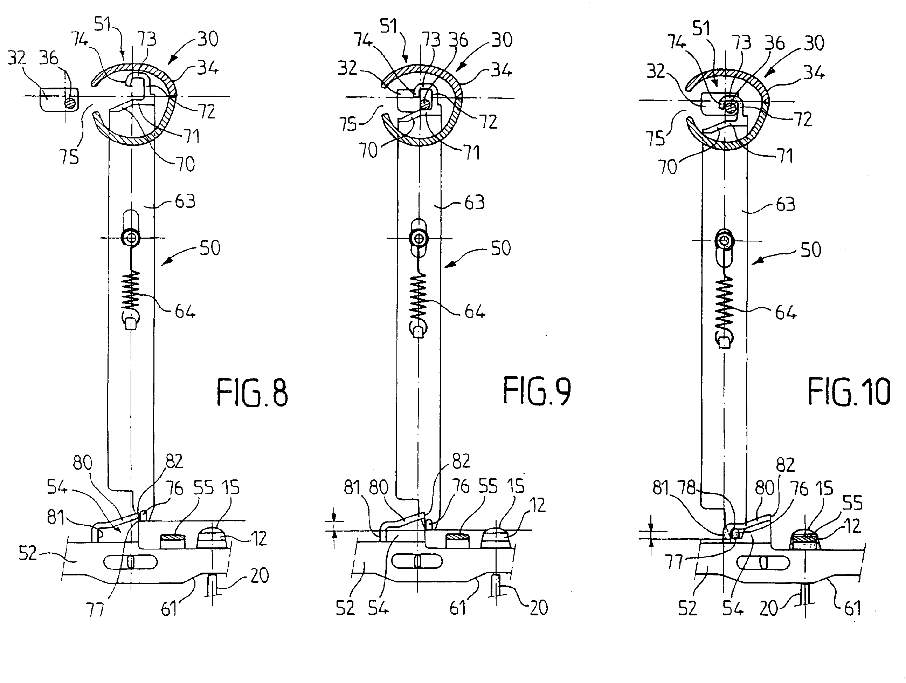

L'élément de commande 52 comporte un organe de commande 54 susceptible de déplacer l'élément de transmission 50 entre une position dans laquelle le couvercle 32 peut être mis en place ou retiré du corps 30 (illustrée à la figure 9), et une autre position dans laquelle le couvercle 32 est verrouillé sur le corps 30 (illustrée à la figure 10).

Tel que visible à la figure 4, le corps 30 comporte sur sa face inférieure six découpes 37.

La figure 5 illustre une forme de réalisation avantageuse de l'élément de commande 52 illustré de manière schématique sur la figure 3. Tel que bien visible sur la figure 5, l'élément de commande 52 comporte une pièce extérieure 56 assemblée avec une pièce intérieure 57, par exemple au moyen de pattes de clipsage 58. L'élément de commande 52 forme avantageusement un anneau.

Les surfaces de came 61 sont issues de la pièce extérieure 56. La pièce extérieure 56 présente une couronne périphérique 60 portant l'organe de manoeuvre 53. Le bord inférieur de la couronne périphérique 60 présente plusieurs surfaces de came 61. Les surfaces de came 61 sont également visibles sur la figure 4 montrant la couronne périphérique 60 agencée autour de la paroi annulaire extérieure 45. Le bord supérieur de la couronne périphérique 60 présente des encoches supérieures 62.

La pièce intérieure 57 présente une couronne interne 65 prolongée en sa périphérie extérieure supérieure par des portions de collerette 66. L'organe de commande 54 est issu de la pièce intérieure 57. Plus particulièrement l'organe de commande 54 est ménagé au dessus de l'une des portions de collerette 66. Les organes de verrouillage 55 sont issus de la pièce intérieure 57. Plus particulièrement, les organes de verrouillage 55 sont formés par des languettes inférieures externes 67 issues de la couronne interne 65. Avantageusement, les organes de verrouillage 55 et les portions de collerette 66 sont agencés de manière alternée.

Tel que mieux visible sur la figure 6, la pièce intérieure 57 est agencée dans la base 43 entre la paroi annulaire intérieure 46 et la paroi annulaire extérieure 45. La pièce intérieure 57 repose sur le fond 44. La pièce extérieure 56 est disposée autour de la paroi annulaire extérieure 45. Les pattes de clipsage 58 sont agencées dans des ouvertures de la paroi annulaire extérieure 45, non visibles aux figures.

Tel que visible à la figure 7, le boîtier 1 comporte une face supérieure 13 entourée d'un bord périphérique supérieur 14. Trois bossages 15 sont ménagés sur la face supérieure du boîtier 1. Un passage 16 est prévu entre les bossages 15 et le bord périphérique supérieur 14 du boîtier 1. Chaque bossage 15 présente sur sa face latérale intérieure l'une des conformations de retenue 12 prévues pour recevoir l'un des organes de verrouillage 55. Plus particulièrement, les conformations de retenue 12 sont formées par des rainures horizontales. Le sommet de la pièce de commande 20 est agencé dans l'un des passages 16. Les bossages 15 sont prévus pour s'engager dans les découpes 37 du corps 30, visibles à la figure 4. Le corps 30 peut ainsi occuper indifféremment six positions sur le boîtier 1. Les bossages 15 permettent de bloquer en rotation le corps 30 sur le boîtier 1.

La construction du dispositif de sécurité 33 va être précisée à l'appui des figures 8 à 10.

L'élément de transmission 50 présente une rampe de pré-actionnement 70 susceptible de coopérer avec le couvercle 32, une butée 77 et un organe d'actionnement 78 susceptibles de coopérer avec l'organe de commande 54.

L'organe de commande 54 présente une zone d'appui 82 susceptible de coopérer avec la butée 77 lorsque le couvercle 32 est écarté de la rampe de pré-actionnement 70. L'organe de commande 54 présente une rampe d'actionnement 80 prévue pour coopérer avec l'organe d'actionnement 78 lorsque le couvercle 32 est en prise avec la rampe de pré-actionnement 70.

Le couvercle 32 porte sur sa périphérie un ergot 36, également visible sur la figure 3. La rampe de pré-actionnement 70 est ménagée sur la partie supérieure de la tige 63. La rampe de pré-actionnement 70 est prolongée d'un méplat 71 raccordé à un montant 72. Une butée supérieure 73 prolonge le montant 72. La butée supérieure 73 est agencée au dessus du méplat 71. Une butée latérale inférieure 74 prolonge la butée supérieure 73. L'ergot 36 peut s'engager dans une ouverture 75 ménagée dans une paroi du corps 30 pour atteindre la partie supérieure de la tige 63. Plus particulièrement, l'ouverture 75 est ménagée sur une face latérale de la poignée 34.

La partie inférieure de la tige 63 présente un ergot inférieur 76 formant la butée 77 et l'organe d'actionnement 78 prévus pour coopérer avec l'organe de commande 54. L'organe de commande 54 comporte une rampe d'actionnement 80 prolongée par une butée latérale 81. La zone d'appui 82 est formée par l'extrémité libre de la rampe d'actionnement 80 à l'opposé de la butée latérale 81.

Le fonctionnement de l'appareil selon l'invention va être expliqué avec les figures 8 à 10.

Dans la figure 8, le couvercle 32 est en place sur le corps 30. Toutefois le couvercle 32 n'est pas verrouillé sur le corps 30. L'ergot 36 est sorti de l'ouverture 75. Le couvercle 32 peut être retiré par l'utilisateur. La tige 63 occupe une position relevée. L'organe de commande 54 est bloqué par la butée 77. Plus particulièrement, la butée 77 bloque la zone d'appui 82 de la rampe d'actionnement 80 de l'organe de commande 54. L'élément de commande 52 est en position de repos et ne peut être manoeuvré. L'organe de verrouillage 55 est dégagé de la conformation de retenue 12. De ce fait, l'accessoire de travail 7 peut être retiré du boîtier 1. La pièce de commande 20 occupe la position de repos. Le moteur n'est pas alimenté et l'appareil ne peut fonctionner.

Dans la figure 9, le couvercle 32 a été amené par rotation en position fermée sur le corps 30. L'ergot 36 est entré dans l'ouverture 75. L'ergot 36 rentrant en contact avec la rampe de pré-actionnement 70 a déplacé la tige 63 vers le bas. La tige 63 occupe une position intermédiaire. L'ergot 36 repose sur le méplat 71. L'organe de commande 54 n'est plus bloqué par la butée 77. L'élément de commande 52 est encore en position de repos, mais peut être manoeuvré.

Dans la figure 10, l'élément de commande 52 a été amené en position de fonctionnement. L'accessoire de travail 7 est maintenant verrouillé sur le boîtier 1. L'organe de verrouillage 55 coopère avec la conformation de retenue 12. Lors du déplacement de l'élément de commande 52, la rampe d'actionnement 80 de l'organe de commande 54 est venue en prise avec l'organe d'actionnement 78. La rampe d'actionnement 80 prenant appui sur l'organe d'actionnement a déplacé la tige 63 vers le bas. Avec la tige 63 en position abaissée, la butée latérale inférieure 74 et le montant 72 encadrent l'ergot 36. La butée latérale inférieure 74 et le montant 72 empêchent le déplacement du couvercle 32. Le couvercle 32 est ainsi verrouillé sur le corps 30. L'utilisateur ne peut retirer le couvercle 32 du corps 30. La butée latérale 81 limite le déplacement de l'élément de commande 52. La pièce de commande 20 a été déplacée en position active par la surface de came 61. Le moteur est alimenté et l'appareil peut fonctionner.

Ainsi l'accessoire de travail 7 amovible comportant un élément de commande 52 est susceptible d'être monté sur le boîtier 1 à la place de l'accessoire de travail 6 dépourvu d'un tel élément de commande 52. L'accessoire de travail 7 peut être verrouillé sur le boîtier 1 et mis en fonctionnement en continu grâce à l'élément de commande 52.

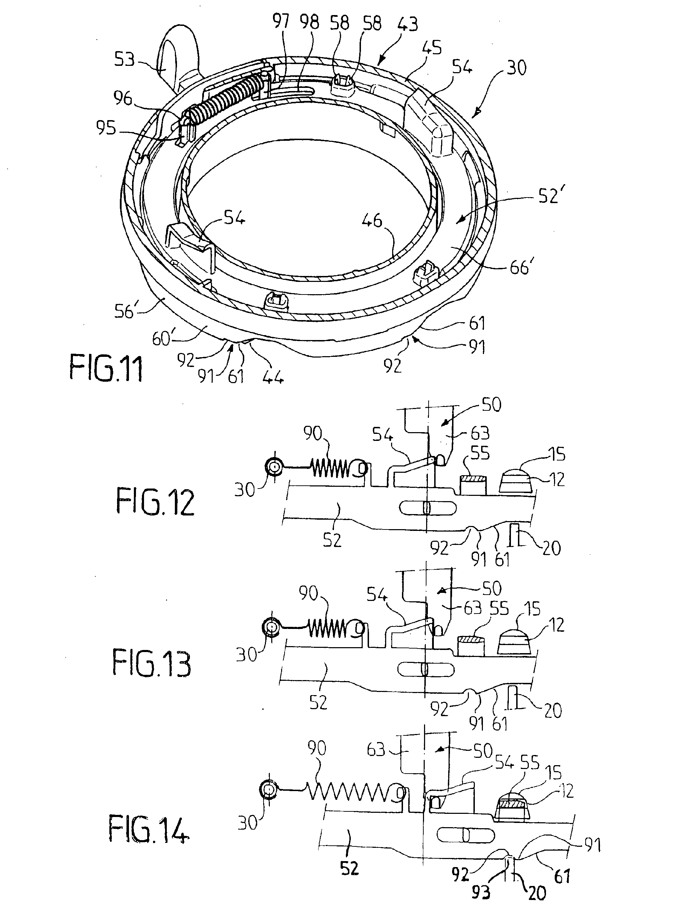

La figure 11 illustre une variante de réalisation de l'élément de commande 52', représenté dans la partie inférieure de la base 43, la partie supérieure de la base 43 ayant été sectionnée pour une meilleure compréhension. L'élément de commande 52' diffère de l'élément de commande 52 en ce qu'un ressort de rappel 90 est monté entre le corps 30 et l'élément de commande 52', et en ce que l'élément de commande 52' présente un moyen de retenue 91 apte à coopérer avec un élément de retenue 93 du boîtier (visible à la figure 14) pour retenir le ressort de rappel 90 hors de sa position de repos lorsque l'accessoire de travail 7 est en place sur le boîtier 1.

Plus particulièrement, la pièce intérieure 57' présente un montant 95 muni d'un crochet 96 prévu pour recevoir l'une des extrémités du ressort de rappel. L'autre extrémité du ressort de rappel 90 est montée sur un tenon 97 issu du fond 44 de la base 43. Le tenon 97 traverse une lumière 98 ménagée dans la pièce intérieure 57'. La pièce intérieure 57' présente une collerette annulaire 66' agencée au dessus d'organes de verrouillage identiques aux organes de verrouillage 55 de l'élément de commande 52. La pièce intérieure 57' porte deux organes de commande 54. La pièce extérieure 56' est assemblée avec la pièce intérieure 57' au moyen de languettes de clipsage 58.

Plus particulièrement, le moyen de retenue 91 de l'élément de commande 52' est formé par un bossage disposé entre la surface de came 61 et une encoche 92 de la partie inférieure de la couronne périphérique 60' de la pièce extérieure 56'. Toutefois le moyen de retenue 91 peut être disposé à d'autres emplacements de l'élément de commande 52'. L 'élément de retenue 93 du boîtier 1 est formé par la pièce de commande 20. De ce fait, l'élément de retenue 93 est monté souple par rapport au boîtier 1. Toutefois l'élément de retenue 93 n'est pas nécessairement formé par la pièce de commande 20. En complément ou en alternative, le moyen de retenue 91 peut être agencé de manière à présenter une légère course par rapport à la direction d'introduction de l'accessoire de travail 7 sur le boîtier 1. Le moyen de retenue 91 peut par exemple être monté souple par rapport à l'élément de commande 52', ou encore l'élément de commande 52' peut être monté souple par rapport au corps 30. Plusieurs moyens de retenue 91 peuvent être prévus si l'élément de commande 52' présente plusieurs surfaces de came 61' prévues pour coopérer avec l'élément de retenue 93.

L'élément de commande 52' est monté mobile entre une position de repos, illustrée à la figure 12, correspondant à la figure 8 de l'exemple de réalisation précédent, et une position de fonctionnement, illustrée à la figure 14, correspondant à la figure 10 de l'exemple de réalisation précédent.

Le fonctionnement de cette variante de réalisation est le suivant :
La figure 12 représente la position stable de repos de l'élément de commande 52'. Le ressort de rappel 90 écarte l'organe de verrouillage 55 de la conformation de retenue 12. Lorsque l'utilisateur met en place le corps 30 sur le boîtier 1, figuré par la pièce de commande 20, l'organe de verrouillage 55 n'interfère pas avec la conformation de retenue 12. A contrario, dans l'exemple de réalisation précédent, l'élément de commande 52 pouvait être amené dans la position de verrouillage incompatible avec la mise en place du corps 30 sur le boîtier 1.
La figure 13 correspond au déplacement de l'élément de transmission 50 dans la position de verrouillage du couvercle tel qu'illustré à la figure 9.
La figure 14 représente la position de verrouillage de l'élément de commande 52'. Le ressort de rappel 90 exerce un effort de rappel sur l'élément de commande 52', mais le moyen de retenue 91 coopérant avec l'élément de retenue 93 du boîtier 1 permet de retenir l'élément de commande 52' par rapport au boîtier 1.

A titre de variante complémentaire, l'accessoire de travail 7 n'est pas nécessairement un bol blender avec un couvercle. Le dispositif de sécurité 33 peut être adapté sur tout type d'accessoire de travail comportant un outil de travail monté en rotation dans un corps et un couvercle susceptible d'être verrouillé sur ledit corps. Par exemple, l'accessoire de travail peut être un accessoire coupe-légume, le couvercle pouvant comporter une cheminée pour l'introduction des aliments, le corps comportant ou non une sortie pour l'éjection des aliments coupés. L'accessoire de travail peut aussi consister en une centrifugeuse, le panier monté en rotation dans le corps étant protégé par un couvercle.

A titre de variante complémentaire, l'élément de commande 52 ; 52' ne comporte pas nécessairement une pièce extérieure 56 ; 56' assemblée avec une pièce intérieure 57 ; 57'. Par exemple, le ou les organes de commande 54 ; 54', les organes de verrouillage 55 et les surfaces de came 61 ; 61' peuvent être issus d'une pièce montée dans le corps 30, l'organe de manoeuvre étant formé par une partie rapportée sur ladite pièce.

A titre de variante complémentaire, l'élément de commande 52 ; 52' ne présente pas nécessairement une forme d'anneau. L'élément de commande 52 ; 52' n'est pas nécessairement monté mobile en rotation, mais peut par exemple être monté mobile en translation.

A titre de variante complémentaire, l'élément de commande 52 ; 52' peut ne comporter qu'une seule surface de came 61 ; 61' prévue pour coopérer avec la pièce de commande 20. De préférence alors, l'accessoire de travail 7 ne peut occuper qu'une seule position sur le boîtier 1.

A titre de variante complémentaire, l'élément de commande 52 ; 52' peut ne comporter qu'un seul organe de verrouillage 55.

A titre de variante complémentaire, un accessoire dépourvu d'élément de transmission 50 prévu pour détecter la présence d'un couvercle peut être envisagé. L'élément de commande 52, 52' sert alors à verrouiller le corps de l'accessoire sur le boîtier de l'appareil.

La présente invention n'est nullement limitée à l'exemple de réalisation décrit et à ses variantes, mais englobe de nombreuses modifications dans le cadre des revendications.

## Revendications

1. Appareil électroménager de préparation culinaire comprenant un boîtier (1) dans lequel est disposé un moteur (10), et un accessoire de travail (7) amovible susceptible d'être monté sur le boîtier (1), l'accessoire de travail (7) comportant un corps (30) et un élément de commande (52 ; 52') solidaire du corps (30), l'élément de commande (52 ; 52') comportant un organe de manoeuvre (53) susceptible d'être actionné par l'utilisateur, l'élément de commande (52 ; 52') étant monté mobile par rapport au corps (30) et étant susceptible d'actionner une pièce de commande (20) du moteur montée dans le boîtier (1), **caractérisé en ce que** l'élément de commande (52 ; 52') comporte un organe de verrouillage (55) prévu pour coopérer avec une conformation de retenue (12) du boîtier (1) lorsque l'élément de commande (52 ; 52') actionne la pièce de commande (20).

2. Appareil électroménager de préparation culinaire selon la revendication 1, **caractérisé en ce que** l'élément de commande (52 ; 52') forme un anneau.

3. Appareil électroménager de préparation culinaire selon l'une des revendications 1 ou 2, **caractérisé en ce que** l'élément de commande (52 ; 52') comporte une pièce intérieure (57 ; 57') assemblée avec une pièce extérieure (56 ; 56').

4. Appareil électroménager de préparation culinaire selon la revendication 3, **caractérisé en ce que** l'organe de manoeuvre (53) est issu de la pièce extérieure (56 ; 56').

5. Appareil électroménager de préparation culinaire selon l'une des revendications 1 à 4, **caractérisé en ce que** l'élément de commande (52 ; 52') présente une surface de came (61 ; 61') susceptible de coopérer avec la pièce de commande (20).

6. Appareil électroménager de préparation culinaire selon les revendications 3 et 5, **caractérisé en ce que** la surface de came (61 ; 61') est issue de la pièce extérieure (56 ; 56').

7. Appareil électroménager de préparation culinaire selon l'une des revendications 3, 4 ou 6, **caractérisé en ce que** l'organe de verrouillage (55) est issu de la pièce intérieure (57 ; 57').

8. Appareil électroménager de préparation culinaire selon l'une des revendications 1 à 7, **caractérisé en ce que** l'accessoire de travail (7) comporte un couvercle (32).

9. Appareil électroménager de préparation culinaire selon la revendication 8, **caractérisé en ce qu'**un élément de transmission (50) agencé dans le corps (30) présente un organe de retenue (64) susceptible d'entraver le déplacement du couvercle (32) par rapport au corps (30), l'élément de commande (52 ; 52') comportant un organe de commande (54) susceptible de déplacer l'élément de transmission (50) entre une position dans laquelle le couvercle (32) peut être mis en place ou retiré du corps (30) et une autre position dans laquelle le couvercle (32) est verrouillé sur le corps (30).

10. Appareil électroménager de préparation culinaire selon les revendications 3 et 9, **caractérisé en ce que** l'organe de commande (54) est issu de la pièce intérieure (57 ; 57').

11. Appareil électroménager de préparation culinaire selon l'une des revendications 9 ou 10, **caractérisé en ce que** l'élément de transmission (50) présente une rampe de pré-actionnement (70) susceptible de coopérer avec le couvercle (32), une butée (78) et un organe d'actionnement (77), l'organe de commande (52 ; 52') présentant une zone d'appui (82) susceptible de coopérer avec la butée (78) lorsque le couvercle (32) est écarté de la rampe de pré-actionnement (70), l'organe de commande (52 ; 52') présentant une rampe d'actionnement (80) prévue pour coopérer avec l'organe d'actionnement (77) lorsque le couvercle (32) est en prise avec la rampe de pré-actionnement (70).

12. Appareil électroménager de préparation culinaire selon l'une des revendications 9 à 11, **caractérisé en ce que** l'élément de transmission (50) comporte une tige (63) montée contre un ressort de rappel (64).

13. Appareil électroménager de préparation culinaire selon l'une des revendications 1 à 12, **caractérisé en ce qu'**un ressort de rappel (90) est monté entre le corps (30) et l'élément de commande (52'), et **en ce que** l'élément de commande (52') présente un moyen de retenue (91) apte à coopérer avec un élément de retenue (93) du boîtier (1) pour retenir le ressort de rappel (90) hors de sa position de repos lorsque l'accessoire de travail (7) est en place sur le boîtier (1).

14. Appareil électroménager de préparation culinaire selon l'une des revendications 1 à 13, **caractérisé en ce qu'**un outil de travail rotatif (31) susceptible d'être entraîné par le moteur (10) est agencé dans le corps (30).

## Claims

1. A household electrical appliance for preparing food, said appliance comprising a housing (1) in which a motor (10) is disposed, and a removable work accessory (7) suitable for being mounted on the housing (1), the work accessory (7) having a body (30) and a control element (52; 52') secured to the body (30), the control element (52; 52') having an operating member (53) suitable for being actuated by the user, the control element (52; 52') being mounted to move relative to the body (30) and being suitable for actuating a control piece (20) for controlling the motor, which control piece is mounted in the housing (1), said household electrical appliance for preparing food being **characterized in that** the control element (52; 52') is provided with a locking member (55) designed to co-operate with a retaining shaped piece in relief (12) of the housing (1) when the control element (52; 52') actuates the control piece (20).

2. A household electrical appliance for preparing food according to claim 1, **characterized in that** the control element (52; 52') forms a ring.

3. A household electrical appliance for preparing food according to claim 1 or claim 2, **characterized in that** the control element (52; 52') comprises an inner piece (57; 57') assembled with an outer piece (56; 56').

4. A household electrical appliance for preparing food according to claim 3, **characterized in that** the operating member (53) is integral with the outer piece (56; 56').

5. A household electrical appliance for preparing food according to any one of claims 1 to 4, **characterized in that** the control element (52; 52') has a cam surface (61; 61') suitable for co-operating with the control piece (20).

6. A household electrical appliance for preparing food according to claim 3 and claim 5, **characterized in that** the cam surface (61; 61') is integral with the outer piece (56; 56').

7. A household electrical appliance for preparing food according to any one of claims 3, 4, or 6, **characterized in that** the locking member (55) is integral with the inner piece (57; 57').

8. A household electrical appliance for preparing food according to any one of claims 1 to 7, **characterized in that** the work accessory (7) has a lid (32).

9. A household electrical appliance for preparing food according to claim 8, **characterized in that** a transmission element (50) arranged in the body (30) presents a retaining member (64) suitable for preventing the lid (32) from moving relative to the body (30), the control element (52; 52') being provided with a control member (54) suitable for moving the transmission element (50) between a position in which the lid (32) can be put in place on or removed from the body (30), and another position in which the lid (32) is locked on the body (30).

10. A household electrical appliance for preparing food according to claim 3 and claim 9, **characterized in that** the control member (54) is integral with the inner piece (57; 57').

11. A household electrical appliance for preparing food according to claim 9 or claim 10, **characterized in that** the transmission element (50) has a pre-actuating ramp (70) that is suitable for co-operating with the lid (32), an abutment (78) and an actuating member (77), the control member (52; 52') having an abutment zone (82) that is suitable for co-operating with the abutment (78) when the lid (32) is spaced apart from the pre-actuating ramp (70), the control member (52; 52') having an actuating ramp (80) designed to co-operate with the actuating member (77) when the lid (32) is in engagement with the pre-actuating ramp (70).

12. A household electrical appliance for preparing food according to any one of claims 9 to 11, **characterized in that** the transmission element (50) comprises a rod (63) mounted against a return spring (64).

13. A household electrical appliance for preparing food according to any one of claims 1 to 12, **characterized in that** a return spring (90) is mounted between the body (30) and the control element (52'), and **in that** the control element (52') has retaining means (91) suitable for co-operating with a retaining element (93) of the housing (1) for retaining the return spring (90) out of its rest position when the work accessory (7) is in place on the housing (1).

14. A household electrical appliance for preparing food according to any one of claims 1 to 13, **characterized in that** a rotary work tool (31) suitable for being driven by the motor (10) is arranged in the body (30).

## Patentansprüche

1. Elektrohaushaltsgerät zur Nahrungsmittelzubereitung, mit einem Gehäuse (1), in dem ein Motor (10) angeordnet ist, und einem abnehmbaren Arbeitszubehörteil (7), das am Gehäuse (1) angebracht sein kann, wobei das Arbeitszubehörteil (7) einen Körper (30) und ein mit dem Körper (30) fest verbundenes Steuerelement (52; 52') aufweist, wobei das Steuerelement (52; 52') ein Bedienungsorgan (53) aufweist, das von dem Benutzer betätigt werden kann, wobei das Steuerelement (52; 52') in Bezug auf den Körper (30) beweglich angebracht ist und ein Teil (20) zur Steuerung des Motors betätigen kann, das im Gehäuse (1) angebracht ist, **dadurch gekennzeichnet, dass** das Steuerelement (52; 52') ein Verriegelungsorgan (55) aufweist, das dazu vorgesehen ist, mit einer Rückhalteanformung (12) des Gehäuses (1) zusammenzuwirken, wenn das Steuerelement (52; 52') das Steuerteil (20) betätigt.

2. Elektrohaushaltsgerät zur Nahrungsmittelzubereitung nach Anspruch 1, **dadurch gekennzeichnet, dass** das Steuerelement (52; 52') einen Ring bildet.

3. Elektrohaushaltsgerät zur Nahrungsmittelzubereitung nach Anspruch 1 oder 2, **dadurch gekennzeichnet, dass** das Steuerelement (52; 52') ein Innenteil (57; 57') aufweist, dass mit einem Außenteil (56; 56') zusammengefügt ist.

4. Elektrohaushaltsgerät zur Nahrungsmittelzubereitung nach Anspruch 3, **dadurch gekennzeichnet, dass** das Bedienungsorgan (53) aus dem Außenteil (56; 56') hervorgeht.

5. Elektrohaushaltsgerät zur Nahrungsmittelzubereitung nach einem der Ansprüche 1 bis 4, **dadurch gekennzeichnet, dass** das Steuerelement (52; 52') eine Nockenfläche (61; 61') aufweist, die mit dem Steuerteil (20) zusammenwirken kann.

6. Elektrohaushaltsgerät zur Nahrungsmittelzubereitung nach den Ansprüchen 3 und 5, **dadurch gekennzeichnet, dass** die Nockenfläche (61; 61') aus dem Außenteil (56; 56') hervorgeht.

7. Elektrohaushaltsgerät zur Nahrungsmittelzubereitung nach einem der Ansprüche 3, 4 oder 6, **dadurch gekennzeichnet, dass** das Verriegelungsorgan (55) aus dem Innenteil (57; 57') hervorgeht.

8. Elektrohaushaltsgerät zur Nahrungsmittelzubereitung nach einem der Ansprüche 1 bis 7, **dadurch gekennzeichnet, dass** das Arbeitszubehörteil (7) einen Deckel (32) aufweist.

9. Elektrohaushaltsgerät zur Nahrungsmittelzubereitung nach Anspruch 8, **dadurch gekennzeichnet, dass** ein im Körper (30) angeordnetes Übertragungselement (50) ein Rückhalteorgan (64) aufweist, das die Verlagerung des Deckels (32) bezüglich des Körpers (30) behindern kann, wobei das Steuerelement (52; 52') ein Steuerorgan (54) aufweist, welches das Übertragungselement (50) zwischen einer Position, in welcher der Deckel (32) auf den Körper (30) aufgesetzt oder von diesem entfernt werden kann, und einer weiteren Position verlagern kann, in welcher der Deckel (32) am Körper (30) verriegelt ist.

10. Elektrohaushaltsgerät zur Nahrungsmittelzubereitung nach den Ansprüchen 3 und 9, **dadurch gekennzeichnet, dass** das Steuerorgan (54) aus dem Innenteil (57; 57') hervorgeht.

11. Elektrohaushaltsgerät zur Nahrungsmittelzubereitung nach Anspruch 9 oder 10, **dadurch gekennzeichnet, dass** das Übertragungselement (50) eine Vorbetätigungsrampe (70), die mit dem Deckel (32) zusammenwirken kann, einen Anschlag (78) und ein Betätigungsorgan (77) aufweist, wobei das Steuerorgan (52; 52') einen Anlagebereich (82) aufweist, der mit dem Anschlag (78) zusammenwirken kann, wenn der Deckel (32) von der Vorbetätigungsrampe (70) weggerückt ist, wobei das Steuerorgan (52; 52') eine Betätigungsrampe (80) aufweist, die dazu vorgesehen ist, mit dem Betätigungsorgan (77) zusammenzuwirken, wenn der Deckel (32) mit der Vorbetätigungsrampe (70) in Eingriff ist.

12. Elektrohaushaltsgerät zur Nahrungsmittelzubereitung nach einem der Ansprüche 9 bis 11, **dadurch gekennzeichnet, dass** das Übertragungselement (50) eine Stange (63) aufweist, die gegen eine Rückstellfeder (64) angebracht ist.

13. Elektrohaushaltsgerät zur Nahrungsmittelzubereitung nach einem der Ansprüche 1 bis 12, **dadurch gekennzeichnet, dass** eine Rückstellfeder (90) zwischen dem Körper (30) und dem Steuerelement (52') angebracht ist und das Steuerelement (52') ein Rückhaltemittel (91) aufweist, das mit einem Rückhaltemittel (93) des Gehäuses (1) zusammenwirken kann, um die Rückstellfeder (90) außerhalb ihrer Ruheposition zu halten, wenn das Arbeitszubehörteil (7) am Gehäuse (1) angeordnet ist.

14. Elektrohaushaltsgerät zur Nahrungsmittelzubereitung nach einem der Ansprüche 1 bis 13, **dadurch gekennzeichnet, dass** ein drehbares Arbeitswerkzeug (31), das vom Motor (10) angetrieben werden kann, im Körper (30) angeordnet ist.
